Europäisches Patentamt

(19) European Patent Office

Office européen des brevets

(11) Numéro de publication : **0 040 577**
**B1**

(12) **FASCICULE DE BREVET EUROPÉEN**

(45) Date de publication du fascicule du brevet :
05.10.83

(21) Numéro de dépôt : **81430013.3**

(22) Date de dépôt : **14.05.81**

(51) Int. Cl.³ : **C 11 C   3/14**

(54) Procédé de conjugaison catalytique des doubles liaisons de corps gras polyinsaturés.

(30) Priorité : 16.05.80 FR 8011186

(43) Date de publication de la demande :
25.11.81 Bulletin 81/47

(45) Mention de la délivrance du brevet :
05.10.83 Bulletin 83/40

(84) Etats contractants désignés :
BE DE GB IT NL SE

(56) Documents cités :
DE A 2 049 937
FR A 2 113 547
GB A 590 784
US A 3 449 384

CHEMICAL ABSTRACTS, vol. 78, no. 19, 14 mai
1973, page 434, abrégé 123976r Columbus, Ohio,
US

(73) Titulaire : **INSTITUT DES CORPS GRAS - I.T.E.R.G.**
**10/a, rue de la Paix**
**F-75002 Paris (FR)**

(72) Inventeur : **Ucciani, Eugéne**
**10, Boulevard de la Gaye 9 Château Sec**
**F-13009 Marseille (FR)**
Inventeur : **Cecchi, Georges**
**Résidence Bois Fleuri 3 Chemin de Pont-de-Vivaux**
**Saint-Tronc F-13010 Marseille (FR)**

(74) Mandataire : **Azais, Henri et al**
**c/o CABINET BEAU DE LOMENIE 14, rue Raphael**
**F-13008 Marseille (FR)**

# 0 040 577

## Procédé de conjugaison catalytique des doubles liaisons de corps gras polyinsaturés

La présente invention concerne un procédé de conjugaison catalytique des doubles liaisons de corps gras polyinsaturés pris dans le groupe des huiles, des acides gras libres et de leurs esters, en vue d'améliorer leurs propriétés siccatives.

Le secteur de la technique consiste en celui des corps gras destinés à l'industrie des peintures et vernis, en vue d'améliorer leurs propriétés siccatives par la conjugaison de leurs doubles liaisons.

On rappelle que la siccativité est l'aptitude à former un film dur par oxydation. Cette propriété se rencontre notamment chez les huiles végétales renfermant des acides gras polyéthyléniques, parmi lesquelles l'huile de lin, de bois de Chine et l'huile de ricin déshydratée sont les plus recherchées. Cependant ces deux dernières présentent l'inconvénient majeur de devoir être importées et donc d'être d'un approvisionnement relativement incertain.

On a cherché à remédier à cet inconvénient en transformant des huiles semi-siccatives, qui renferment une proportion élevée d'acide linoléique, telles que les huiles de carthame, de soja, de pépins de raisins, de tournesol par exemple et autres corps gras.

On sait que les propriétés siccatives sont liées à la conjugaison des doubles liaisons et on a donc cherché à transformer les corps gras comportant des doubles liaisons non conjuguées en isomères dans lesquels les doubles liaisons sont conjuguées.

Un procédé de conjugaison des doubles liaisons connu utilise l'anhydride sulfureux et présente des inconvénients dus au caractère polluant et agressif de ce gaz et au faible rendement obtenu.

Le brevet US 3 449 384 (H. H. ENDER) décrit des procédés catalytiques d'isomérisation de corps gras polyinsaturés consistant à mélanger au corps gras un hydrosilicone et à opérer en présence d'un catalyseur d'addition du groupe SiH. Un premier catalyseur décrit est par exemple une solution d'acide chloroplatinique dans de l'éthanol et du diméthylester d'éthylène glycol. Un deuxième catalyseur est du naphténate de cobalt. Les revendications généralisent à des catalyseurs d'addition de SiH contenant un métal du groupe VIII parmi lesquels le ruthénium. Il est précisé que la réaction de conjugaison a lieu seulement en présence à la fois d'un hydrosilicone et d'un catalyseur.

Ce brevet décrit un procédé de conjugaison en présence obligatoire d'un hydrosilicone et d'un catalyseur qui catalyse la fixation d'un groupe SiH sur une double liaison.

Le brevet GB-A-590 784 (BRITISH PAINT Ltd) décrit un procédé catalytique de conjugaison des doubles liaisons d'un corps gras en phase vapeur à haute température. Les catalyseurs cités sont la silice amorphe, la terre à foulon activée, les silicates et oxydes de métaux et tous les métaux sauf les alcalins et alcalino-terreux.

Le brevet DE-A-2 049 937 (HENKEL et Cie) décrit des procédés de conjugaison catalytique de doubles liaisons en présence de complexes de rhodium ou de ruthénium en combinaison avec des chlorures ou bromures métalliques.

L'objectif de la présente invention est de procurer un nouveau procédé catalytique de conjugaison des doubles liaisons de corps gras polyinsaturés pris dans le groupe des huiles, des acides gras libres et de leurs esters qui permette d'opérer en phase liquide à des températures relativement basses, inférieures aux températures d'ébullition, avec un bon rendement de la conversion des doubles liaisons non conjuguées en doubles liaisons conjuguées d'où une amélioration sensible des propriétés siccatives.

Cet objectif est atteint au moyen d'un procédé catalytique qui a lieu en phase liquide, par chauffage non oxydant d'un mélange du corps gras à traiter et de ruthénium métal sur charbon, la proportion de ruthénium métal étant au moins égale à 0,01 % du poids de corps gras.

De préférence, le catalyseur comporte un poids de ruthénium 25 métal compris entre 0,5 et 5 % du poids total du catalyseur.

Dans le cas où les corps gras à traiter contiennent des peroxydes, on traite lesdits corps gras par une terre décolorante, de préférence par une bentonite acide, avant la réaction catalytique.

Dans le cas où les corps gras à traiter contiennent des composés soufrés, on soumet les corps gras à un raffinage ou une désodorisation préalablement à la réaction catalytique.

De préférence, avant la réaction catalytique, on procède à une isomérisation cis-trans des corps gras.

De préférence, avant la réaction catalytique, on additionne aux corps gras un composé protique pris dans le groupe des alcools composé du méthanol, de l'éthanol, du n et iso-propanol, du n, iso, sec et ter-butanol, du n-hexanol, de l'alcool allylique, furfurylique, du diphénylcarbinol et du phénol ou dans le groupe des acides comportant l'acide formique, acétique, oxalique et succinique.

Dans le cas où l'on additionne aux corps gras un alcool, les proportions d'alcool et de corps gras sont équimolaires.

Dans le cas où l'on additionne aux corps gras un acide, les proportions d'acide sont d'au moins 0,1 mmole et de préférence de 0,5 mmole pour 1 gramme de corps gras.

Selon un mode préférentiel de mise en œuvre dudit procédé, la réaction catalytique a lieu à une température d'environ 200 °C, sous une pression d'azote d'environ 1 bar.

Le produit obtenu par la mise en œuvre du procédé selon l'invention comporte des diènes conjugués et possède une aptitude à polymériser en présence d'oxygène ou non. Une application particulière de tels produits est leur utilisation comme matière première de l'industrie des revêtements tels que peintures et vernis, colles.

2

## 0 040 577

Le résultat de l'invention est de nouveaux procédés de conjugaison catalytique de corps gras polyinsaturés, les produits obtenus ainsi que leurs applications.

L'avantage principal procuré par l'invention est d'offrir une mise en œuvre simple et peu coûteuse applicable à des corps gras courants et variés : huiles, acides gras, esters.

Un autre avantage est d'obtenir des produits renfermant un pourcentage élevé de diènes conjugués accompagnés des dimères et trimères, et d'assurer ainsi diverses utilisations dans les domaines de l'industrie où l'on recherche les produits de polymérisation facile.

Le procédé est de plus économique par la réutilisation du catalyseur une fois lavé, sans diminution effective du rendement.

Sa mise en œuvre ne pose pas de problème de sécurité du personnel, elle ne présente pas de risque quant aux installations ou à l'environnement.

Une application est l'industrie des revêtements, peintures et vernis, colles, garnitures et toute autre utilisation des produits obtenus par le procédé selon l'invention due à la présence de diènes conjugués, dimères, trimères leur conférant par exemple une aptitude à la polymérisation.

D'autres caractéristiques et avantages de l'invention seront mieux compris à la lecture de la description qui va suivre de plusieurs exemples de réalisation.

Tous les pourcentages indiqués ci-après sont en poids.

Le procédé consiste à catalyser la conjugaison de corps gras polyinsaturés par le ruthénium déposé sur charbon, soit en abrégé Ru/C.

Le mode opératoire et les différents réactifs mis en jeu sont définis ci-après :

Mode Opératoire :

Les expériences relatées ci-après ont été conduites en « batch » dans un réacteur qui est un cylindre en inox muni d'un couvercle étanche, résistant à une pression d'au moins 10 bars et muni des accessoires indispensables à la mise en œuvre du procédé, et notamment d'un système d'agitation efficace, du type ancre, par exemple.

Le produit à conjuguer, une fois filtré ou pré-traité tel qu'exposé ci-après est pesé et une quantité P est placée.

La proportion nécessaire de catalyseur (sec ou humide, qualité 5 ou 0,5 % Ru/C) est calculée sur la base de P, pesée et ajoutée. A ce stade peuvent être introduits les additifs : l'alcool, l'acide organique.

Le réacteur est ensuite hermétiquement fermé et mis en pression d'azote. L'agitation est lancée, puis le réacteur est décomprimé, recomprimé, plusieurs fois de suite, pour chasser l'oxygène. La pression définitive est fixée aux environs de 1 bar, et le chauffage est mis en route. La réaction commence avant l'arrivée en température, aussi le temps 0 est-il pris à partir du moment où la température affichée est atteinte.

Lorsque la réaction est terminée (soit au bout d'un temps préalablement fixé, soit à la suite de l'analyse d'un prélèvement), le chauffage est arrêté, l'agitation est diminuée, et après quelques minutes le réacteur est plongé dans un bain d'eau froide.

Lorsque le réacteur est froid, la vanne d'évacuation des gaz est ouverte, le contenu du réacteur est filtré (tel quel ou après dissolution dans de l'éther de pétrole par exemple).

La filtration peut s'effectuer sur verre fritté, sur papier filtre, sur filtre presse etc. par tout moyen permettant de récupérer quantitativement le catalyseur.

Celui-ci après lavage à chaud par de l'hexane par exemple, est prêt pour une nouvelle utilisation.

Après évaporation du solvant, le produit conjugué est prêt pour l'utilisation.

Analyses :

L'échantillon (20 mg environ) prélevé en cours ou en fin de réaction peut être analysé en quelques minutes par chromatographie en phase gazeuse, sans qu'il soit nécessaire d'enlever le catalyseur.

L'échantillon est mis en solution dans 1 ml d'éther de pétrole et placé dans un tube fermé. On ajoute 0,2 ml de soude méthanolique 2 N et on agite vigoureusement pendant dix secondes. On porte 15 à 50° dans un bain marie pendant vingt secondes et on agite encore dix secondes. On ajoute alors 0,4 ml d'acide chlorhydrique méthanolique N, on agite et on laisse décanter.

Il suffit de prélever avec une microseringue la quantité nécessaire d'esters méthyliques à injecter dans le chromatographe (phase surnageante).

La composition en esters méthyliques est établie grâce aux techniques quantitatives usuelles, par étalonnage interne (par rapport au palmitate de méthyle), ce qui permet de connaître la proportion de « non élués », c'est-à-dire dimères essentiellement et trimères.

On utilise préférentiellement entre 0,01 % et 0,1 % de ruthénium rapporté au poids de composé à conjuguer et l'on opère à une température comprise entre 150 et 250 °C, préférentiellement en présence d'un gaz non oxydant, tel l'azote.

Dans le cas de réaction en « batch », on agite à une vitesse comprise entre 400 et 1 200 tours mn$^{-1}$ et la durée de la réaction est en général d'une à quatre heures.

On obtient alors un mélange final comportant outre les diènes conjugués, des dimères et trimères, avec des monoènes et parfois des triènes en faible proportion.

Il faut remarquer que dimères et trimères ne nuisent pas à la siccativité du produit.

3

**0 040 577**

De même, les diènes non conjugués, présents dans le mélange final participeront à la polymérisation ultérieure dans l'application qui sera faite de ce produit.

La composition de divers corps gras traités et produits finaux obtenus par le procédé selon l'invention est indiquée ci-dessous, les conditions opératoires étant les suivantes :

$T = 200\,°C$, $P = 1$ bar $N_2$, 1 000 tours par mn en « batch », 0,1 % de Ru par rapport au poids de corps à conjuguer, dispersé à 5 % de Ru/C, durée de réaction = 2 heures.

| Corps gras / Produit final | Composition (g/100 g) | | | | |
|---|---|---|---|---|---|
| | $C_{18:0}$ | $C_{18:1}$ | $C_{18:2}$ | diènes conjugués | dimères trimères |
| Linoléate de méthyle | – | – | ≃ 100 | – | – |
| Produit de conjug. | – | 5,2 | 35,2 | 44,7 | 14,9 |
| Huile de tournesol | 5,0 | 25,6 | 61,5 | – | – |
| Produit de conjug. | 5,1 | 28,6 | 13,4 | 38,1 | 6,6 |
| Huile de pépins de raisins | 3,6 | 15,5 | 72,8 | – | – |
| Produit de conjug. | 3,9 | 18,1 | 23,3 | 40,1 | 7,4 |

Dans les essais ci-après, on a fait varier les différentes conditions opératoires et notamment la température, les proportions et dispersion du catalyseur, la durée de la réaction et la nature du corps à conjuguer.

L'agitation en « batch » est comprise entre 400 et 1 200 tours $mn^{-1}$, préférentiellement 1 000 tours $mn^{-1}$ environ.

Pour les essais ci-après, la température réactionnelle est de 200 °C

(voir tableaux pages suivantes)

4

| Corps gras | Qualité de Ru/C (% poids) | Proportion Ru/substrat (% poids) | Durée (h.). | Conversion % du (Teneur initiale %) | |
|---|---|---|---|---|---|
| | | | | Linoléique | Linolénique |
| Acides gras de pépins de raisins (labo). | 0,5 | 0,02 | 1,5 | 56,6 | |
| id. | 5 | 0,10 | 1 | 51,9 | |
| Acides gras de pépins de raisins (indus.) | 0,5 | 0,02 | 1,5 | 43,1 | |
| Acides gras de ricin déshydraté (indus.) | 0,5 | 0,02 | 1,5 | 51,7 | |
| Acides gras de tournesol (labo). | 5 | 0,1 | 1 | 69,6 | |
| Linoléate de méthyle(tout cis) | 0,5 | 0,02 | 1 | 78,0 | |
| Linélaidate de méthyle (tout trans) | 0,5 | 0,02 | 0,1 | 85,0 | |
| Linélaidate de butyle (tout trans) | 0,5 | 0,02 | 0,1 | 84,0 | |
| Esters méthyliques de pépins de raisins | 5 | 0,1 | 1 | 46,0 | |
| Huile de tournesol | 5 | 0,1 | 2 | 79,5 (61,5) | - |
| Huile de pépins de raisins | 5 | 0,1 | 2 | 69,4 (72,8) | - |
| Huile de Carthame | 5 | 0,1 | 2 | 84,3 (70,8) | 100 (2,1) |
| Huile de Soja | 5 | 0,1 | 2 | 52,0 (53,4) | 89,0 (7,0) |
| Huile de Colza | 5 | 0,1 | 2 | 61,5 (21,8) | 91,8 (9,0) |
| Huile de Lin | 5 | 0,1 | 2 | 38,5 (16,9) | 63,5 (59,8) |
| Huile de Tournesol raffinée | 5 | 0,1 | 2 | 79,3 | |
| id. | 0,5 | 0,02 | 1,5 | 80,2 | |
| Huile de pépins de raisins raffinée | 5 | 0,1 | 2 | 68,5 | |
| id. | 0,5 | 0,02 | 1,5 | 65,2 | |

| Corps gras | T (°C) | Qual. Ru/C % | Ru/subst. (% poids) | Durée (h.) | C 16:0 | C 18:0 | C 18:1 | C 18:2 | C 18:2 conj. | Dimères | Conversion ( % du linoléique) |
|---|---|---|---|---|---|---|---|---|---|---|---|
| Huile de tournesol | Avant | | conjugaison | | 6,6 | 4,7 | 25,9 | 61,5 | - | - | - |
| " | 200 | 5 | 0,100 | 1 | 6,6 | 5,0 | 26,0 | 57,5 | 4,0 | - | 6,5 |
| " | 250 | 5 | 0,100 | 1 | 6,6 | 5,0 | 29,4 | 19,0 | 31,0 | 7,6 | 69,1 |
| " | 250 | 5 | 0,075 | 1,3 | 6,6 | 5,0 | 28,5 | 28,1 | 26,8 | 4,0 | 54,3 |
| " | 250 | 5 | 0,050 | 2,0 | 6,6 | 5,1 | 27,7 | 36,5 | 23,0 | - | 40,7 |
| " | 250 | 5 | 0,020 | 5,0 | 6,6 | 5,0 | 26,4 | 46,5 | 14,1 | - | 24,4 |

Catalyseur :

Il se présente sous la forme d'une poudre noire, dont la densité est comprise entre 0,2 et 0,4 et la surface entre 500 et 1 200 m²/g. S'il est livré anhydre, il doit être stocké sous azote pour éviter l'oxydation. S'il est humide, la seule précaution à prendre est d'éviter l'évaporation de l'eau.

Il est actif même employé à faible dose. On utilise préférentiellement au moins 0,01 % de ruthénium, rapporté au poids du composé à conjuguer.

Le catalyseur est également caractérisé par la dispersion du métal sur le support de charbon. Les proportions en poids de métal sur celui du catalyseur sont préférentiellement comprises entre 0,5 et 5 % de Ru/C. On remarque que, dispersé à 0,5 %, le catalyseur est de dix à vingt fois plus efficace qu'à 5 %.

Par contre, si l'on veut le réutiliser, il est préférable d'employer la qualité 5 % Ru/C et de procéder à l'étape postérieure à la conjugaison, de recyclage du catalyseur qui se déroule comme suit : on filtre le catalyseur, une fois la conjugaison terminée, puis on lave à chaud, par exemple à l'hexane. En effectuant des filtrages et lavages en fin de conjugaison, on peut réutiliser le même catalyseur au moins dix fois en n'observant qu'une faible diminution du rendement. On n'a recours au raffinage du catalyseur que lorsque son activité a nettement baissé.

Des essais de réutilisation du catalyseur dispersé à 5 % Ru/C sont résumés dans le tableau ci-après, les conditions opératoires du procédé de conjugaison étant les suivantes : T = 200 °C, P = 1 bar $N_2$, 1 000 tours $mn^{-1}$ en « batch », 0,1 % Ru rapporté au poids de l'huile de tournesol à conjuguer, durée = 2 h.

| ESSAIS | Conversion du linoléique % |
|---|---|
| 1° essai | 79,0 |
| 2° essai (1ᵉ réutilisation) | 65,9 |
| 3° essai (2ᵉ réutilisation) | 55,1 |
| 4° essai (3ᵉ réutilisation) | 61,2 |
| 5° essai (4ᵉ réutilisation) | 56,8 |
| 6° essai (5ᵉ réutilisation) | 55,4 |
| 7° essai (6ᵉ réutilisation) | 71,8 |
| 8° essai (7ᵉ réutilisation) | 61,0 |
| 9° essai (8ᵉ réutilisation) | 52,3 |

Produits à conjuguer :

Les corps gras polyinsaturés et, plus particulièrement, les acides gras, les huiles et leurs esters sont utilisés tels que livrés, filtrés si nécessaire ou prétraités en vue d'une meilleure conjugaison.

Une étape préalable est conseillée dans les cas suivants : si l'on décèle des peroxydes, des composés soufrés dans les produits de départ, si ceux-ci ne sont pas des isomères trans-trans.

Présence de peroxydes :

On effectue une opération de terrage, en prenant de 1 à 2 % de terre légèrement acide du type bentonite acide, par exemple la terre Tonsyl optimum FF, et en faisant réagir avec le composé à conjuguer, environ 45 mn sous azote, à 90 °C et avec agitation de 900 tours $mn^{-1}$ en « batch ».

Présence de composés soufrés :

On procède au raffinage complet des produits à conjuguer, ou uniquement à l'étape de désodorisation qui permet d'éliminer ou modifier les composés gênants et d'augmenter l'activité du catalyseur.

Isomérisation cis-trans :

Une isomérisation cis-trans préalable accroît beaucoup la vitesse de conjugaison : par exemple l'acide linélaidique (isomère trans-trans) se conjugue vingt fois plus vite que son isomère cis-cis, l'acide linoléique.

| Corps Gras | Conversion % du | |
| --- | --- | --- |
| (teneur en $O_2$ ou S du corps gras à conjuguer) | linoléique | linolénique |
| Huile de tournesol (165 $\mu g O_2/g$) | 66,0 | – |
| après terrage (6 $\mu g\ O_2/g$) | 80,7 | – |
| Huile de pépins de raisins (123 $\mu g\ O_2/g$) | 44,4 | – |
| après terrage (20 $\mu g\ O_2/g$) | 65,2 | – |
| Huile de carthame (140 $\mu g\ O_2/g$) | 45,2 | 75,0 |
| après terrage (20 $\mu g\ O_2/g$) | 85,0 | 100 |
| Huile de lin (200 $\mu g\ O_2/g$) | 11,8 | 21,7 |
| après terrage (7 $\mu g\ O_2/g$) | 39,5 | 62,7 |
| Huile de colza brute (121 ppm S) | 23,2 | 48,5 |
| après raffinage (40 ppm S) | 61,0 | 92,9 |
| Huile acide de tournesol (320 ppm S) | 6,7 | – |
| après lavage et terrage (250 ppm S) | 20,0 | – |

Les essais ci-dessus relatent les résultats obtenus dans le cas de corps gras prétraités ou non, tel que décrit ci-avant, et montrent l'intérêt d'une telle étape préalable dans les conditions opératoires de la réaction de conjugaison suivante :

T = 200 °C, P = 1 bar $N_2$, 1 000 tours $mn^{-1}$ en « batch », 0,1 % de Ru par rapport au poids de corps gras à conjuguer, dispersé à 5 % de Ru/C, durée de réaction = 2 heures.

Additifs éventuels :

Aux composés à conjuguer et au catalyseur, on peut adjoindre un composé protique qui est un alcool ou un acide organique, dilué ou non. Dans ces variantes, on remarque une très nette amélioration des résultats et plus spécialement avec les alcools primaires et les acides formique et oxalique.

Les essais relatés ci-après dénotent l'influence d'un tel additif sur l'activité du catalyseur.

Les conditions opératoires sont les suivantes :

T = 200 °C, P = 1 bar $N_2$, 1 000 tours $mn^{-1}$ en « batch », 0,1 % Ru rapporté au poids de corps gras à conjuguer, dispersé à 5 % Ru/C, durée de réaction = 1 heure.

Pour les six premiers essais de conjugaison du linoléate de méthyle en présence de divers acides organiques, les réactifs sont en solution dans l'hexane, milieu non favorable.

| Corps gras | Acide (0,5 mmole/g corps gras) | Conversion % du linoléique |
| --- | --- | --- |
| Linoléate de méthyle en solution dans l'hexane | sans | 18,0 |
| " | formique | 68,2 |
| " | acétique | 39,1 |
| " | phénol | 33,3 |
| " | oxalique | 60,4 |
| " | succinique | 59 |

(voir tableaux page 9)

8

| Corps gras | Alcool (1:1 moles) | Conversion % du linoléique |
|---|---|---|
| Linoléate de Méthyle | sans | 40,5 |
| " | Méthanol | 87,7 |
| " | Ethanol | 80,1 |
| " | n-propanol | 77,4 |
| " | n-butanol | 70,2 |
| " | n-hexanol | 63,2 |
| " | Isopropanol | 47,8 |
| " | sec.butanol | 45,0 |
| " | ter.butanol | 50,2 |
| " | Alcool allylique | 47,0 |
| " | Diphénylcarbinol | 38,4 |
| " | Alcool furfurylique | 77,4 |
| " | Eau | 32,3 |
| " | Eau 20, méthanol 80 | 78,5 |
| " | Eau 30, méthanol 70 | -75,5 |
| " | Eau 50, méthanol 50 | 63,0 |

| Corps gras | | Conversion % du linoléique |
|---|---|---|
| Huile de pépins de raisins raffinée | | 38,4 |
| " | Méthanol (1ml/g corps gras) | 77,4 |
| " | Acide formique (0,025g/g corps gras) | 89,2 |

Les produits de conjugaison obtenus en fin de réaction, comme il ressort des données des tableaux précédents, ne renferment généralement pas des diènes conjugués uniquement.

Il faut noter cependant que la présence des produits secondaires et des isomères ne nuit pas à l'application industrielle qui en sera faite.

Selon les proportions relatives des différents composants du produit final en modifiant les propriétés, celui-ci sera choisi pour un type de revêtement plutôt qu'un autre. Dans la fabrication de peintures, vernis par exemple, intervient la préparation de résines pour laquelle les produits de conjugaison obtenus par l'invention sont utilisés.

D'une façon générale, ces produits, étant aptes à polymériser avec ou sans oxygène, pourront être employés chaque fois que cette propriété est recherchée.

Des essais complémentaires ont été réalisés pour étudier les effets d'une adjonction d'acide formique aux corps gras en vue d'améliorer la conjugaison catalytique des doubles liaisons.

L'acide formique s'est révélé être l'additif protique le plus intéressant du fait qu'il est décomposé en libérant du gaz carbonique.

Une première série d'essais a été réalisée pour déterminer comment variait la vitesse de conversion de l'acide linoléique d'une huile de pépins de raisin en présence de 0,1 g de ruthénium métal pour 100 g d'huile à une température de 200°.

Au cours de ces essais on a fait varier la proportion en poids d'acide formique entre 0 et 1,8 g d'acide formique pour 100 g d'huile et on a mesuré le temps nécessaire en minutes pour obtenir un taux de 60 % de conversion de l'acide linoléique.

Ces essais ont montré que ce temps décroissait selon une courbe d'allure hyperbolique et était de 120 m pour une proportion d'acide formique nulle, de 30 m pour une proportion d'acide formique de 0,3 g/100 g d'huile, de 15 m pour 0,6 g d'acide formique/100 g d'huile, de 5 m pour 0,9 g d'acide formique/100 g d'huile et de 2 m pour 1,8 g d'acide formique/100 g d'huile.

Finalement ces essais montrent que la proportion d'acide formique doit se situer entre 0,3 et 0,9 g/100 g d'huile et être de préférence de l'ordre de 0,6 g/100 g d'huile, c'est-à-dire de l'ordre de 0,1 à 0,2 mmole pour 1 g d'huile.

Les réactions principales d'isomérisation sont les isomérisations des acides linoléiques (C18 : 2) et linolénique (C18 : 3) en systèmes conjugués. Deux phénomènes secondaires viennent limiter le rendement en systèmes conjugués : la formation de monoènes et la formation de polymères.

Des essais de conjugaison catalytique d'huile de pépins de raisin, à 200°, en présence de 0,1 g de ruthénium métal/100 g d'huile et d'acide formique ont montré que la proportion de monoène (C18 : 1) croissait avec la proportion d'acide formique. Pour un taux de conversion de 60 % de l'acide linoléique, le taux de monoène est de 5 % lorsque l'on opère en présence d'une quantité d'acide formique inférieure à 0,6 %. Il est de 8 % si l'on opère en présence de 1,2 % d'acide formique et de 13 % si l'on opère en présence de 2,4 % d'acide formique.

Par contre, pour un taux de conversion inférieur à 80 %, la quantité de polymère dans le produit final diminue lorsque la proportion d'acide formique augmente. Pour un taux de conversion de 60 %, la proportion de polymères est de 10 % sans acide formique, de 6 % en présence de 0,6 % d'acide formique, de 5 % en présence de 1,2 % d'acide formique et de 4 % en présence de 2,4 % d'acide formique.

Finalement ces essais montrent qu'une proportion de 0,6 g d'acide formique pour 100 g d'huile est une proportion préférentielle.

Compte tenu de l'augmentation d'activité du catalyseur due à la présence d'acide formique, des essais ont été réalisés pour rechercher s'il était possible de réduire la quantité de ruthénium tout en conservant un taux de conversion et une vitesse de réaction intéressants.

Ces essais ont montré qu'une réaction rapide conduisant à 55 % de conversion de l'acide linoléique en isomère conjugué était obtenue à 200° en présence de 0,6 g d'acide formique pour 100 g d'huile de pépins de raisin, en un temps de l'ordre de 15 m en présence de 0,02 % de ruthénium métal alors qu'en utilisant 0,1 % de ruthénium métal, soit cinq fois plus, sans acide formique, il faut 120 m pour obtenir un taux de conversion de 60 %. L'addition de 0,6 % d'acide formique permet donc de diviser par cinq la quantité de catalyseur.

## Revendications

1. Procédé de conjugaison catalytique des doubles liaisons de corps gras polyinsaturés pris dans le groupe des huiles, des acides gras libres et de leurs esters en vue d'améliorer leurs propriétés siccatives, caractérisé en ce que la réaction catalytique a lieu en phase liquide par chauffage non oxydant d'un mélange du corps gras à traiter et de ruthénium métal sur charbon, la proportion de ruthénium-métal étant au moins égale à 0,01 % du poids de corps gras.

2. Procédé selon la revendication 1, caractérisé en ce que ledit catalyseur comporte un poids de ruthénium métal compris entre 0,5 et 5 % du poids total du catalyseur.

3. Procédé selon l'une quelconque des revendications 1 et 2, caractérisé en ce que, une fois la réaction de conjugaison terminée, on filtre puis on lave ledit catalyseur, préférentiellement à l'hexane à chaud, et que l'on réutilise ensuite ledit catalyseur lavé pour une nouvelle opération de conjugaison.

4. Procédé selon l'une quelconque des revendications 1 à 3 pour conjuguer les doubles liaisons de corps gras comportant des peroxydes, caractérisé en ce que, dans une étape préalable à la réaction catalytique, on traite lesdits corps gras par une terre décolorante, préférentiellement par une bentonite acide.

5. Procédé selon l'une quelconque des revendications 1 à 3 pour conjuguer les doubles liaisons de corps gras comportant des composés soufrés, caractérisé en ce que, dans une étape préalable à la réaction catalytique, on soumet lesdits corps gras à un raffinage ou une désodorisation.

6. Procédé selon l'une quelconque des revendications 1 à 6, caractérisé en ce que, dans une étape préalable à la réaction catalytique, on procède à une isomérisation cis-trans des corps gras.

7. Procédé selon l'une quelconque des revendications 1 à 7, caractérisé en ce que l'on additionne audit corps gras avant la réaction catalytique un composé protique pris dans le groupe des alcools composé du méthanol, éthanol, n et iso-propanol, n, iso, sec- et ter-butanol, n-hexanol, alcool allylique, furfurylique, diphénylcarbinol et phénol ou dans le groupe des acides composé de l'acide formique, acétique, oxalique, succinique.

8. Procédé selon la revendication 7, caractérisé en ce que les proportions respectives dudit composé protique pris dans le groupe des alcools et du corps gras sont équimolaires.

9. Procédé selon la revendication 7, caractérisé en ce que les proportions dudit produit protique pris dans le groupe des acides sont d'au moins 0,1 mmole et, préférentiellement, de l'ordre de 0,5 mmole pour 1 g de corps gras.

10. Procédé selon les revendications 1 à 9 caractérisé en ce que la réaction catalytique a lieu à une température d'environ 200 °C sous une pression d'azote d'environ 1 bar.

## Claims

1. A process for the catalytic conjugation of double bonds of polyinsaturated fatty substances selected from the group of oils, free fatty acids and the esters thereof with a view to improving their drying properties, characterized in that the catalytic reaction takes place in liquid phase by the non-oxidising heating of a mixture of the fatty substance to be treated and of ruthenium metal on charcoal, the proportion of ruthenium metal being at least equal to 0.01 % of the fatty substance weight.

2. A process according to claim 1, characterized in that the weight of the ruthenium metal contained in the said catalyst is between 0.5 and 5 % of the total weight of the catalyst.

3. A process according to any one of claims 1 and 2, characterized in that when the conjugation reaction is completed, the said catalyst is filtered and washed, preferably with hot hexane, and the said washed catalyst is subsequently reused for a further conjugation operation.

4. A process according to any one of claims 1 to 3 for the conjugation of double bonds of fatty substances comprising peroxides, characterized in that in a step prior to the catalytic reaction, the said fatty substances are treated with a decolorizing clay, preferably with an acid bentonite.

5. A process according to any one of claims 1 to 3 for the conjugation of double bonds of fatty substances comprising sulphured compounds, characterized in that in a step prior to the catalytic reaction, the said fatty substances are subjected to refining or deodorizing.

6. A process according to any one of claims 1 to 6, characterized in that in a step prior to the catalytic reaction, the cis-trans isomerization of the fatty substances is carried out.

7. A process according to any one of claims 1 to 7, characterized in that to the said fatty substance is added, before the catalytic reaction, a protein compound selected from the group of alcohols consisting of methanol, ethanol n, iso, sec and terbutanol, n-hexanol, allylic, furfurylic alcohol, diphenylcarbinol and phenol or from the group of acids consisting of formic, acetic, oxalic, succinic acid.

8. A process according to claim 8, characterized in that the respective proportions of the said protein compound selected from the group of alcohols and of the fatty substance are equimolar.

9. A process according to claim 7, characterized in that the proportions of said protein product selected from the group of acids are at least 0.1 mmole and preferably about 0.5 mmole per g of fatty substance.

10. A process according to claims 1 to 9, characterized in that the catalytic reaction takes place at a temperature of about 200 °C under a nitrogen pressure of about 1 bar.

## Ansprüche

1. Verfahren zur katalytischen Konjugation der Doppelbindungen polyungesättigter Fettkörper aus der Gruppe Öle, freie Fettsäuren und ihre Ester, zwecks Verbesserung ihrer Trocknungseigenschaften, dadurch gekennzeichnet, daß die katalytische Reaktion in flüssiger Phase durch nicht oxidierendes Erhitzen einer Mischung aus dem zu behandelnden Fettkörper und Rutheniummetall auf Kohle stattfindet, wobei der Anteil an Rutheniummetall zumindest gleich 0,01 Gew.% des Fettkörpers ist.

2. Verfahren nach Anspruch 1, dadurch gekennzeichnet, daß der Katalysator einen Gewichtsanteil an Rutheniummetall zwischen 0,5 und 5 % des Gesamtgewichtes des Katalysators aufweist.

3. Verfahren nach einem der Ansprüche 1 und 2, dadurch gekennzeichnet, daß nach Beendigung der Konjugationsreaktion der Katalysator abfiltriert, dann, vorzugsweise in heißem Hexan gewaschen wird und der gewaschene Katalysator danach für einen neuen Konjugationsvorgang wiederverwendet wird.

4. Verfahren nach einem der Ansprüche 1 bis 3 zur Konjugation der Doppelbindungen von Peroxide enthaltenden Fettkörpern, dadurch gekennzeichnet, daß die Fettkörper in einer Stufe vor der katalytischen Reaktion mit einer Bleicherde, vorzugsweise mit saurem Betonit, behandelt werden.

5. Verfahren nach einem der Ansprüche 1 bis 3 zur Konjugation der Doppelbindungen von Schwefelverbindungen enthaltenden Fettkörpern, dadurch gekennzeichnet, daß die Fettkörper in einer Stufe vor der katalytischen Reaktion einer Raffination oder einer Desodorierung unterzogen werden.

6. Verfahren nach einem der Ansprüche 1 bis 5, dadurch gekennzeichnet, daß in einer Stufe vor der katalytischen Reaktion eine cis-trans-Isomerisierung der Fettkörper durchgeführt wird.

7. Verfahren nach einem der Ansprüche 1 bis 6, dadurch gekennzeichnet, daß vor der katalytischen Reaktion eine protische Verbindung aus der Gruppe der Alkohole, umfassend Methanol, Äthanol, n- und Isopropanol, n-, Iso-, sec. und tert. Butanol, n-Hexanol, Allylalkohol, Furfurylalkohol, Diphenylcarbinol und Phenol, oder aus der Gruppe der Säuren, umfassend Ameisensäure, Essigsäure, Oxalsäure,

**0 040 577**

Bernsteinsäure, zum Fettkörper zugegeben wird.

8. Verfahren nach Anspruch 7, dadurch gekennzeichnet, daß die jeweiligen Anteile der protischen Verbindung aus der Gruppe der Alkohole und des Fettkörpers äquimolar sind.

9. Verfahren nach Anspruch 7, dadurch gekennzeichnet, daß die Verhältnisse des protischen Produktes aus der gruppe der Säuren zumindest 0,1 mMol, vorzugsweise 0,5 mMol, pro 1 g Fettkörper betragen.

10. Verfahren nach den Ansprüchen 1 bis 9, dadurch gekennzeichnet, daß die katalytische Reaktion bei einer Temperatur von etwa 200 °C unter einem Stickstoffdruck von etwa 1 bar stattfindet.